# FASCICULE DE BREVET EUROPEEN

(11) **EP 3 365 649 B1**
(45) Date de publication et mention de la délivrance du brevet: **11.12.2024**
(21) Numéro de dépôt: 16798249.5
(22) Date de dépôt: 24.10.2016
(51) Int. Cl.: G01L 19/14, G01L 19/06, G01L 13/02

(54) **CAPTEUR DE PRESSION DIFFÉRENTIELLE**
DIFFERENZDRUCKSENSOR
DIFFERENTIAL PRESSURE SENSOR

(30) Priorité: 22.10.2015 FR 1560068
(43) Date de publication de la demande: 29.08.2018
(73) Titulaire: Valeo Electrification, 95800 Cergy (FR)
(72) Inventeur: GUEGUEN, Olivier, 14210 Baron sur Odon (FR); VATER, Johannes, 80802 Munich (DE); GELEZ, Nicolas, 78230 Le Pecq (FR)
(74) Mandataire: Valeo Powertrain Systems
(86) Numéro de dépôt international: PCT/FR2016/052753
(87) Numéro de publication internationale: WO 2017/068306

(56) Documents cités:
- DE-A1- 102006 048 068
- DE-A1- 102006 048 068
- DE-A1- 102006 048 068
- DE-A1- 102007 057 903
- DE-A1- 102007 057 903
- DE-A1- 102007 057 903
- DE-A1- 102011 077 686
- DE-A1- 102011 077 686
- DE-A1- 102011 077 686

## Description

La présente invention concerne un capteur de pression différentielle pour mesurer la pression dans un conduit de gaz d'échappement d'un moteur thermique et un procédé de fabrication d'un tel capteur.

Un tel capteur de pression différentielle est utilisé dans les systèmes de gaz d'échappement de véhicules thermiques. Il peut par exemple être utilisé pour mesurer une différence de pression à deux endroits différents d'une ligne d'échappement, comme par exemple avant et après un filtre à particules.

Les capteurs de pression différentielle de l'art antérieur comprennent un boîtier de protection comportant une cavité dans laquelle est logé un circuit imprimé en céramique (PCB) ou en résine comme dans le document DE102007057903A1 sur lequel est monté un élément sensible à la pression.

Le circuit imprimé en céramique comprend une ouverture fermée par l'élément sensible à la pression et des composants électroniques connectés électriquement à l'élément sensible à la pression.

Le boîtier de protection comprend une première entrée de pression communicant avec une première surface de l'élément sensible à la pression et une deuxième entrée de pression communicant avec une deuxième surface d'élément sensible à la pression. Ces deux surfaces de l'élément sensible à la pression sont isolées hermétiquement.

L'élément sensible à la pression est en contact avec les gaz d'échappement qui est un environnement chaud et acide susceptible d'endommager et d'encrasser la surface de l'élément sensible à la pression. Un gel est donc prévu pour protéger cette surface.

Les capteurs de pression différentiels de l'art antérieur comprennent un circuit imprimé en céramique car ce dernier est résistant à cet environnement agressif.

Le capteur de pression différentielle comprend un connecteur pour le relier à un dispositif électronique de contrôle. Le circuit imprimé en céramique est relié aux contacts électriques de ce connecteur au moyen de liaisons électriques. Ces liaisons électriques sont séparées de l'élément sensible à la pression par une paroi de protection afin de les protéger de l'environnement agressif.

D'autres capteurs de pression différentielle de l'art antérieur comprennent en alternative un gel recouvrant les liaisons électriques pour les protéger de l'environnement agressif.

Le problème avec les capteurs de pression différentielle de l'art antérieur est qu'ils sont chers à cause de l'utilisation de circuits imprimés en céramique. De plus, la paroi de protection de certains de ces capteurs de pression différentielle ne protège pas complètement les connexions électriques. Une partie des gaz d'échappement arrive à traverser cette paroi.

L'invention a donc pour objectif de pallier à ces inconvénients de l'art antérieur en proposant un capteur de pression différentielle moins chers avec une résistance aux agressions des gaz d'échappement équivalente.

L'invention a également pour objectif de fournir un procédé de fabrication d'un capteur de pression différentielle plus simple, comprenant moins d'étapes de fabrication.

L'invention concerne un capteur de pression différentielle pour mesurer la pression dans un conduit de gaz d'échappement d'un moteur thermique, comprenant :
- un élément sensible à la pression,
- un circuit imprimé comprenant une ouverture fermée par l'élément sensible à la pression et des composants électroniques connectés électriquement à l'élément sensible à la pression au moyen de connexions électriques, et
- un boîtier de protection comprenant une cavité dans laquelle sont logés le circuit imprimé et l'élément sensible à la pression, ledit boîtier de protection comprenant une première entrée de pression et une deuxième entrée de pression.

Selon l'invention,
- le circuit imprimé est un circuit imprimé en résine époxy, et
- le capteur de pression comprend un matériau solide remplissant partiellement la cavité du boîtier de protection et enrobant le circuit imprimé de façon à isoler sa surface externe des gaz d'échappement et à former deux chemins de pression isolés l'un de l'autre par le matériau solide, dont un premier chemin de pression reliant la première entrée de pression à la surface inférieure de l'élément sensible à la pression et un deuxième chemin de pression reliant la deuxième entrée de pression à la surface supérieure de l'élément sensible à la pression,
- le matériau solide est une résine époxy,
- le capteur de pression différentielle comprend un support d'élément sensible comprenant une enveloppe supportée par le circuit imprimé et comprenant une ouverture supérieure et une ouverture inférieure fermée par l'élément sensible à la pression, ladite ouverture inférieure étant prolongée par un tube inséré dans l'ouverture du circuit imprimé.

En variante, le tube se prolonge partiellement à travers le matériau solide.

En variante, l'enveloppe du support d'élément sensible contient un gel pour protéger la surface supérieure de l'élément sensible à la pression.

En variante, le boîtier de protection comprend un couvercle comportant un canal comprenant une première extrémité en communication fluidique avec la première entrée de pression du boîtier de protection et une deuxième extrémité connectée au tube du support d'élément sensible de façon à former le premier chemin de pression.

En variante, la deuxième entrée de pression du boîtier de protection est en communication fluidique avec l'ouverture supérieure de l'enveloppe du support d'élément sensible de façon à former le deuxième chemin de pression.

L'invention fournit ainsi un capteur de pression différentielle comprenant un circuit imprimé en résine époxy moins chers que ceux de l'art antérieur utilisant un circuit imprimé en céramique.

Ce capteur de pression différentielle est également plus résistant à l'environnement extérieur composé de gaz d'échappement et dans lequel sont réalisées les mesures de pression.

L'invention concerne également un procédé de fabrication d'un capteur de pression différentielle tel que définit précédemment.

Selon l'invention, le procédé comprend les étapes suivantes :
- fournir un boîtier de protection comprenant une cavité, une première entrée de pression et une deuxième entrée de pression,
- disposer un circuit imprimé en résine époxy dans la cavité du boîtier de protection, ledit circuit imprimé comprenant une ouverture fermée par l'élément sensible à la pression,
- injecter une résine dans la cavité du boîtier de protection pour former un matériau solide remplissant partiellement la cavité du boîtier de protection et enrobant le circuit imprimé de façon à isoler sa surface externe des gaz d'échappement et à former deux chemins de pression isolés l'un de l'autre par le matériau solide, dont un premier chemin de pression reliant la première entrée de pression à la surface inférieure de l'élément sensible à la pression et un deuxième chemin de pression reliant la deuxième entrée de pression à la surface supérieure de l'élément sensible à la pression.

Le capteur de pression différentielle comprend un support d'élément sensible comportant une enveloppe supportée par le circuit imprimé, une ouverture supérieure et une ouverture inférieure fermée par l'élément sensible à la pression. L'ouverture inférieure est prolongée par un tube inséré dans l'ouverture du circuit imprimé.

Le procédé comprend alors, avant l'étape d'injection d'une résine dans la cavité du boîtier de protection, une étape de fermeture du boîtier de protection par un couvercle comportant un canal comprenant une première extrémité en communication fluidique avec la première entrée de pression du boîtier de protection et une deuxième extrémité. La deuxième extrémité est emboîtée dans le tube du support d'élément sensible de façon à former le premier chemin de pression.

En variante, lors de l'étape d'injection de la résine, la cavité du boîtier de protection est remplie par la résine jusqu'au voisinage de la première extrémité du canal sans la recouvrir et jusqu'au voisinage de l'ouverture supérieure de l'enveloppe sans la recouvrir.

L'invention fournit ainsi un procédé de fabrication d'un capteur de pression différentielle plus simple comprenant moins d'étapes de fabrication.

Les caractéristiques de l'invention seront décrites plus en détail en se référant aux dessins annexés dans lesquels :
- la figure 1 est une représentation schématique d'un capteur de pression différentielle selon l'invention ;
- la figure 2 est une vue externe de ce capteur de pression différentielle ;
- la figure 3 représente un boîtier de protection après l'étape de fourniture de ce boîtier, selon le procédé de fabrication du capteur de l'invention ;
- la figure 4 représente un circuit imprimé en résine époxy inséré dans la cavité du boîtier de protection après l'étape de disposition de ce circuit dans la cavité ;
- la figure 5 représente le boîtier de protection fermé par un couvercle après l'étape de fermeture du boîtier par ce couvercle ;
- la figure 6 représente le circuit imprimé enrobé d'un matériau solide après l'étape d'injection d'une résine dans la cavité du boîtier de protection.

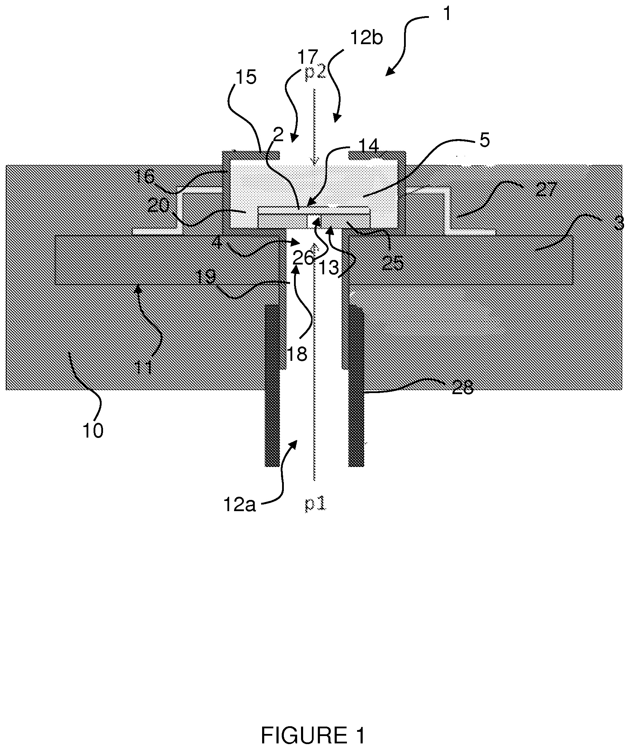

La figure 1 représente schématiquement un capteur de pression différentielle 1 pour mesurer une différence de pression dans un conduit de gaz d'échappement d'un moteur thermique, selon l'invention.

Ce capteur de pression différentielle 1 comprend un élément sensible à la pression 2 et un circuit imprimé 3 en résine époxy comprenant une ouverture 4 fermée par l'élément sensible à la pression 2. Le circuit imprimé 3 comprend des composants électroniques non représentés connectés électriquement à l'élément sensible à la pression 2 au moyen de connexions électriques 5 et 27. Le circuit imprimé 3 est de préférence un circuit imprimé communément appelé FR4 PCB (« Flamme Résistant 4 Printed Circuit Board ») qui est un composite de résine époxy renforcé de fibre de verre.

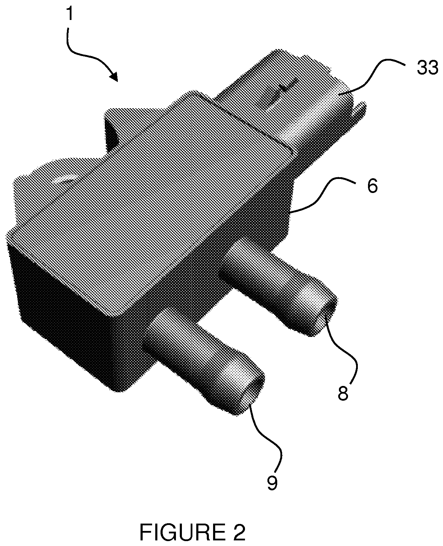

Le capteur de pression différentielle 1 comprend un boîtier de protection 6 comprenant une cavité 7 dans laquelle sont logés le circuit imprimé 3 et l'élément sensible à la pression 2. Le boîtier de protection 6 comprend une première entrée de pression 8 et une deuxième entrée de pression 9, comme représenté sur la figure 2.

Le boîtier de protection 6 comprend un ou plusieurs éléments de fixation 30 sur lesquels est fixé le circuit imprimé 3. Les éléments de fixation 30 permettent également de centrer le circuit imprimé 3 dans le boîtier de protection 6.

Le capteur de pression différentielle 1 comprend un matériau solide 10 remplissant partiellement la cavité 7 du boîtier de protection 6 et enrobant le circuit imprimé 3 de façon à isoler sa surface externe 11 et 32 des gaz d'échappement et à former deux chemins de pression 12a, 12b isolés hermétiquement l'un de l'autre par le matériau solide 10, dont un premier chemin de pression 12a reliant la première entrée de pression 8 à la surface inférieure 13 de l'élément sensible à la pression 2 et un deuxième chemin de pression 12b reliant la deuxième entrée de pression 9 à la surface supérieure 14 de l'élément sensible à la pression 2.

Le matériau solide 10 est une résine époxy.

Le capteur de pression différentielle 1 comprend un support d'élément sensible 15 comprenant une enveloppe 16 supportée par le circuit imprimé 3. L'enveloppe 16 présente une section circulaire ou quadrilatérale, par exemple.

L'enveloppe 16 comprend une ouverture supérieure 17 et une ouverture inférieure 18 fermée par l'élément sensible à la pression 2. L'élément sensible à la pression 2 est positionné à l'intérieur de l'enveloppe 16 et obture l'ouverture entre 12a et 12b. L'élément sensible 2 est soumis la pression issue de 12a et 12b, c'est cette contrainte générée sur la membrane qui génère la pression différentielle.

L'ouverture inférieure 18 de l'enveloppe 16 est prolongée par un tube 19 inséré hermétiquement dans l'ouverture 4 du circuit imprimé 3.

Le tube 19 se prolonge partiellement à travers le matériau solide 10 et ne le traverse pas complètement.

Le matériau solide 10 entoure l'enveloppe 16 et s'étend jusqu'au voisinage de son ouverture supérieure 17 de façon à ne pas l'obturer.

L'élément sensible à la pression 2 peut être monté avec un support 25 qui est muni d'un orifice central 26 communicant avec l'intérieur du tube 19.

L'enveloppe 16 du support d'élément sensible 15 contient un gel 20 pour protéger la surface supérieure 14 de l'élément sensible à la pression 2.

Le capteur de pression différentielle 1 comprend un connecteur 33 pour le relier à un dispositif électronique de contrôle externe. Le circuit imprimé 3 est relié à des contacts électriques de ce connecteur 33 au moyen de liaisons électriques qui sont recouvertes par le matériau solide 10. Ceci permet de protéger les contacts électriques en même temps que le circuit imprimé 3 par le même matériau solide 10, évitant l'utilisation d'une paroi de protection ou de gel sur les contacts électriques.

Le capteur de pression différentielle 1 comprend des pattes de fixation 27 permettant de fixer le support d'élément sensible 15 au circuit imprimé 3.

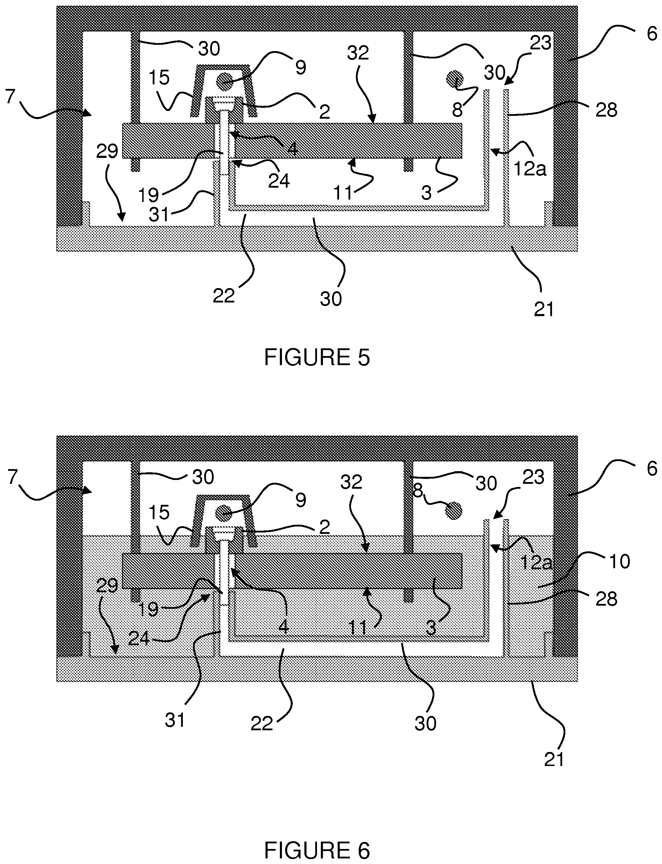

Comme représenté sur la figure 6, le boîtier de protection 6 comprend un couvercle 21 comportant un canal 22 comprenant une première extrémité 23 en communication fluidique avec la première entrée de pression 8 du boîtier de protection 6 et une deuxième extrémité 24 connectée au tube 19 du support d'élément sensible 15 de façon à former le premier chemin de pression 12a.

Le canal 22 est intégré au couvercle 21. Il est par exemple formé lors de l'opération de moulage du couvercle 21.

En variante, le canal 22 peut être indépendant du couvercle 21.

Plus précisément, le canal 22 présente une forme en « U ». Il comprend une première portion 28 reliée à la première entrée de pression 8 et faisant saillie sur la surface interne 29 du couvercle 21.

Le canal 22 comprend une deuxième portion 30 reliée à la première portion 28 et longeant la surface interne 29 du couvercle 21.

Le canal 22 comprend une troisième portion 31 reliée à la deuxième portion 30 et faisant saillie sur la surface interne 29 du couvercle 21. Cette troisième portion 31 comprend la deuxième extrémité 24 du canal 22 qui est emboîtée dans le tube 19 du support d'élément sensible 15.

La première portion 28 et la troisième portion 31 du canal 22 sont sensiblement perpendiculaires. La première portion 28 du canal 22 est plus longue que la troisième portion 31.

La première portion 28 du canal 22 comprend la première extrémité 23 du canal 22. Le matériau solide 10 s'étend jusqu'au voisinage de cette première extrémité 23 façon à ne pas l'obturer.

La première extrémité 23 du canal 22 est disposée à proximité de la première entrée de pression 8.

La deuxième entrée de pression 9 du boîtier de protection 6 est en communication fluidique avec l'ouverture supérieure 17 de l'enveloppe 16 du support d'élément sensible 15 de façon à former le deuxième chemin de pression 12b.

L'invention concerne également un procédé de fabrication d'un capteur de pression différentielle 1 tel que défini ci-dessus.

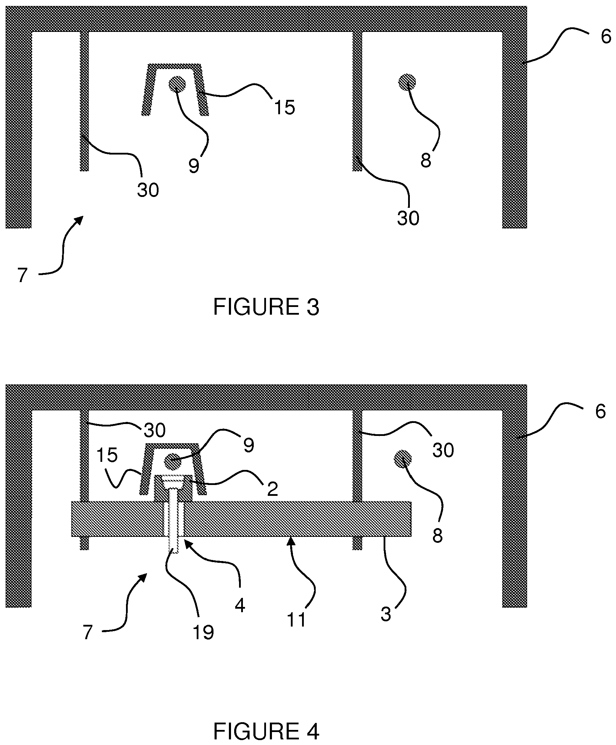

Le procédé de fabrication comprend les étapes suivantes :
- fournir un boîtier de protection 6 comprenant une cavité 7, une première entrée de pression 8 et une deuxième entrée de pression 9, comme représenté sur la figure 3,
- disposer un circuit imprimé 3 en résine époxy dans la cavité 7 du boîtier de protection 6. Le circuit imprimé 3 comprend une ouverture 4 fermée par l'élément sensible à la pression 2, comme représenté sur la figure 4,
- injecter une résine dans la cavité 7 du boîtier de protection 6 pour former un matériau solide 10 remplissant partiellement la cavité 7 du boîtier de protection 6, comme représenté sur la figure 6. Le matériau solide 10 enrobe le circuit imprimé 3 de façon à isoler sa surface externe 11 et 32 des gaz d'échappement et à former deux chemins de pression 12a, 12b isolés l'un de l'autre par le matériau solide 10, dont un premier chemin de pression 12a reliant la première entrée de pression 8 à la surface inférieure 13 de l'élément sensible à la pression 2 et un deuxième chemin de pression 12b reliant la deuxième entrée de pression 9 à la surface supérieure 14 de l'élément sensible à la pression 2.

Le support d'élément sensible 15 comporte une enveloppe 16 supportée par le circuit imprimé 3. L'enveloppe 16 comprend une ouverture supérieure 17 et une ouverture inférieure 18 séparée par l'élément sensible à la pression 2. L'ouverture inférieure 18 est prolongée par un tube 19 inséré dans l'ouverture 4 du circuit imprimé 3.

Le procédé comprend, avant l'étape d'injection d'une résine dans la cavité 7 du boîtier de protection 6, une étape de fermeture du boîtier de protection 6 par un couvercle 21, comme représenté sur la figure 5. Le couvercle 21 comporte un canal 22 comprenant une première extrémité 23 en communication fluidique avec la première entrée de pression 8 du boîtier de protection 6 et une deuxième extrémité 24. Lors de cette étape, la deuxième extrémité 24 est emboîtée hermétiquement dans le tube 19 du support d'élément sensible 15 de façon à former le premier chemin de pression 12a.

Lors de l'étape d'injection de la résine, la cavité 7 du boîtier de protection 6 est remplie par la résine jusqu'au voisinage de la première extrémité 23 du canal 22 sans la recouvrir et jusqu'au voisinage de l'ouverture supérieure 17 de l'enveloppe 16 sans la recouvrir.

Ainsi, la résine permet de séparer de façon hermétique les deux chemins de pression 12a, 12b, sans les obturer.

Comme représenté sur la figure 6, lors de l'étape d'injection de la résine, le couvercle 21 est disposé en bas et les entrées de pression 8, 9 en haut par rapport à la verticale. De cette façon, la résine commence à recouvrir la surface interne 29 du couvercle 21, remonte et finit par recouvrir toute la surface externe 11 et 32 du circuit imprimé 3 potentiellement en contact avec les gaz d'échappement. La surface supérieure 32 du circuit imprimé 3 est recouverte par la résine de quelques millimètres. Autrement dit, le circuit imprimé 3 est entièrement enrobé par la résine qui durcit pour former le matériau solide 10.

Pour injecter la résine, un orifice est prévu dans le boîtier de protection (non représenté). Ce dernier est bouché par la résine après l'étape de remplissage.

Selon un mode de réaliastion, un gel 20 est ensuite introduit dans l'enveloppe 16 du support d'élément sensible 15 pour recouvrir et protéger la surface supérieure 14 de l'élément sensible à la pression 2.

## Revendications

1. Capteur de pression différentielle (1) pour mesurer la pression dans un conduit de gaz d'échappement d'un moteur thermique, comprenant :
- un élément sensible à la pression (2),
- un circuit imprimé (3) comprenant une ouverture (4) fermée par l'élément sensible à la pression (2) et des composants électroniques connectés électriquement à l'élément sensible à la pression (2) au moyen de connexions électriques (5),
- un boîtier de protection (6) comprenant une cavité (7) dans laquelle sont logés le circuit imprimé (3) et l'élément sensible à la pression (2), ledit boîtier de protection (6) comprenant une première entrée de pression (8) et une deuxième entrée de pression (9),
- le circuit imprimé (3) est un circuit imprimé en résine époxy,
- le capteur de pression (1) comprend un matériau solide (10) remplissant partiellement la cavité (7) du boîtier de protection (6) et enrobant le circuit imprimé (3) de façon à isoler sa surface externe (11 et 32) des gaz d'échappement et à former deux chemins de pression (12a, 12b) isolés l'un de l'autre par le matériau solide (10), dont un premier chemin de pression (12a) reliant la première entrée de pression (8) à la surface inférieure (13) de l'élément sensible à la pression (2) et un deuxième chemin de pression (12b) reliant la deuxième entrée de pression (9) à la surface supérieure (14) de l'élément sensible à la pression (2), le matériau solide (10) étant une résine époxy injectée
**caractérisé en ce qu'**il comprend également :
- un support d'élément sensible (15) comprenant une enveloppe (16) supportée par le circuit imprimé (3) et comprenant une ouverture supérieure (17) et une ouverture inférieure (18) fermée par l'élément sensible à la pression (2), ladite ouverture inférieure (18) étant prolongée par un tube (19) inséré dans l'ouverture (4) du circuit imprimé (3).

2. Capteur de pression différentielle (1) selon la revendication 1, **caractérisé en ce que** le tube (19) se prolonge partiellement à travers le matériau solide (10).

3. Capteur de pression différentielle (1) selon l'une quelconque des revendications 1 ou 2, **caractérisé en ce que** l'enveloppe (16) du support d'élément sensible (15) contient un gel (20) pour protéger la surface supérieure (14) de l'élément sensible à la pression (2).

4. Capteur de pression différentielle (1) selon l'une quelconque des revendications 1 à 3, **caractérisé en ce que** le boîtier de protection (6) comprend un couvercle (21) comportant un canal (22) comprenant une première extrémité (23) en communication fluidique avec la première entrée de pression (8) du boîtier de protection (6) et une deuxième extrémité (24) connectée au tube (19) du support d'élément sensible (15) de façon à former le premier chemin de pression (12a).

5. Capteur de pression différentielle (1) selon l'une quelconque des revendications 1 à 4, **caractérisé en ce que** la deuxième entrée de pression (9) du boîtier de protection (6) est en communication fluidique avec l'ouverture supérieure (17) de l'enveloppe (16) du support d'élément sensible (15) de façon à former le deuxième chemin de pression (12b).

6. Procédé de fabrication d'un capteur de pression différentielle (1) selon l'une quelconque des revendications 1 à 5, **caractérisé en ce qu'**il comprend les étapes suivantes :
- fournir un boîtier de protection (6) comprenant une cavité (7), une première entrée de pression (8) et une deuxième entrée de pression (9),
- disposer un circuit imprimé (3) en résine époxy dans la cavité (7) du boîtier de protection (6), ledit circuit imprimé (3) comprenant une ouverture (4) fermée par l'élément sensible à la pression (2),
- injecter une résine dans la cavité (7) du boîtier de protection (6) pour former un matériau solide (10) remplissant partiellement la cavité (7) du boîtier de protection (6) et enrobant le circuit imprimé (3) de façon à isoler sa surface externe (11 et 32) des gaz d'échappement et à former deux chemins de pression (12a, 12b) isolés l'un de l'autre par le matériau solide (10), dont un premier chemin de pression (12a) reliant la première entrée de pression (8) à la surface inférieure (13) de l'élément sensible à la pression (2) et un deuxième chemin de pression (12b) reliant la deuxième entrée de pression (9) à la surface supérieure (14) de l'élément sensible à la pression (2).

7. Procédé de fabrication d'un capteur de pression différentielle (1) selon la revendication 6, le capteur de pression différentielle (1) comprenant un support d'élément sensible (15) comportant une enveloppe (16) supportée par le circuit imprimé (3), une ouverture supérieure (17) et une ouverture inférieure (18) fermée par l'élément sensible à la pression (2), ladite ouverture inférieure (18) étant prolongée par un tube (19) inséré dans l'ouverture (4) du circuit imprimé (3), **caractérisé en ce que** le procédé comprend, avant l'étape d'injection d'une résine dans la cavité (7) du boîtier de protection (6),
- une étape de fermeture du boîtier de protection (6) par un couvercle (21) comportant un canal (22) comprenant une première extrémité (23) en communication fluidique avec la première entrée de pression (8) du boîtier de protection (6) et une deuxième extrémité (24), ladite deuxième extrémité (24) étant emboîtée dans le tube (19) du support d'élément sensible (15) de façon à former le premier chemin de pression (12a).

8. Procédé de fabrication d'un capteur de pression différentielle (1) selon la revendication 7, **caractérisé en ce que** lors de l'étape d'injection de la résine, la cavité (7) du boîtier de protection (6) est remplie par la résine jusqu'au voisinage de la première extrémité (23) du canal (22) sans la recouvrir et jusqu'au voisinage de l'ouverture supérieure (17) de l'enveloppe (16) sans la recouvrir.

## Patentansprüche

1. Differenzdrucksensor (1) zum Messen des Drucks in einer Abgasleitung eines Verbrennungsmotors, beinhaltend:
- ein drucksensitives Element (2),
- eine Leiterplatte (3), die eine Öffnung (4), die durch das drucksensitive Element (2) verschlossen wird, und elektronische Komponenten, die mittels elektrischer Verbindungen (5) mit dem drucksensitiven Element (2) elektrisch verbunden sind, beinhaltet,
- ein Schutzgehäuse (6), das einen Hohlraum (7) beinhaltet, in dem die Leiterplatte (3) und das drucksensitive Element (2) untergebracht sind, wobei das Schutzgehäuse (6) einen ersten Druckeingang (8) und einen zweiten Druckeingang (9) beinhaltet,
- wobei die Leiterplatte (3) eine Leiterplatte aus Epoxidharz ist,
- wobei der Drucksensor (1) ein festes Material (10) beinhaltet, das den Hohlraum (7) des Schutzgehäuses (6) teilweise ausfüllt und die Leiterplatte (3) umhüllt, sodass es deren Außenoberfläche (11 und 32) von den Abgasen isoliert und zwei Druckwege (12a, 12b) bildet, die durch das feste Material (10) voneinander isoliert sind, darunter ein erster Druckweg (12a), der den ersten Druckeingang (8) mit der unteren Oberfläche (13) des drucksensitiven Elements (2) verbindet, und ein zweiter Druckweg (12b), der den zweiten Druckeingang (9) mit der oberen Oberfläche (14) des drucksensitiven Elements (2) verbindet, wobei das feste Material (10) ein eingespritztes Epoxidharz ist,
**dadurch gekennzeichnet, dass** er ferner Folgendes beinhaltet:
- einen Sensorelementträger (15), der eine Hülle (16) beinhaltet, die von der Leiterplatte (3) getragen wird und eine obere Öffnung (17) und eine untere Öffnung (18), die von dem drucksensitiven Element (2) verschlossen wird, beinhaltet, wobei die untere Öffnung (18) durch ein Rohr (19) verlängert wird, das in die Öffnung (4) der Leiterplatte (3) eingeführt ist.

2. Differenzdrucksensor (1) nach Anspruch 1, **dadurch gekennzeichnet, dass** das Rohr (19) teilweise durch das feste Material (10) hindurch verlängert ist.

3. Differenzdrucksensor (1) nach einem der Ansprüche 1 oder 2, **dadurch gekennzeichnet, dass** die Hülle (16) des Sensorelementträgers (15) ein Gel (20) enthält, um die obere Oberfläche (14) des drucksensitiven Elements (2) zu schützen.

4. Differenzdrucksensor (1) nach einem der Ansprüche 1 bis 3, **dadurch gekennzeichnet, dass** das Schutzgehäuse (6) einen Deckel (21) beinhaltet, der einen Kanal (22) umfasst, der ein erstes Ende (23) in Fluidkommunikation mit dem ersten Druckeingang (8) des Schutzgehäuses (6) und ein zweites Ende (24), das mit dem Rohr (19) des Sensorelementträgers (15) verbunden ist, beinhaltet, um so den ersten Druckweg (12a) zu bilden.

5. Differenzdrucksensor (1) nach einem der Ansprüche 1 bis 4, **dadurch gekennzeichnet, dass** der zweite Druckeingang (9) des Schutzgehäuses (6) mit der oberen Öffnung (17) der Hülle (16) des Sensorelementträgers (15) in Fluidkommunikation steht, um so den zweiten Druckweg (12b) zu bilden.

6. Verfahren zur Herstellung eines Differenzdrucksensors (1) nach einem der Ansprüche 1 bis 5, **dadurch gekennzeichnet, dass** es die folgenden Schritte beinhaltet:
- Bereitstellen eines Schutzgehäuses (6), das einen Hohlraum (7), einen ersten Druckeingang (8) und einen zweiten Druckeingang (9) beinhaltet,
- Anordnen einer Leiterplatte (3) aus Epoxidharz in dem Hohlraum (7) des Schutzgehäuses (6), wobei die Leiterplatte (3) eine Öffnung (4) beinhaltet, die durch das drucksensitive Element (2) verschlossen wird,
- Einspritzen eines Harzes in den Hohlraum (7) des Schutzgehäuses (6), um ein festes Material (10) zu bilden, das den Hohlraum (7) des Schutzgehäuses (6) teilweise ausfüllt und die Leiterplatte (3) umhüllt, sodass es deren Außenoberfläche (11 und 32) von den Abgasen isoliert und zwei Druckwege (12a, 12b) bildet, die durch das feste Material (10) voneinander isoliert sind, darunter ein erster Druckweg (12a), der den ersten Druckeingang (8) mit der unteren Oberfläche (13) des drucksensitiven Elements (2) verbindet, und ein zweiter Druckweg (12b), der den zweiten Druckeingang (9) mit der oberen Oberfläche (14) des drucksensitiven Elements (2) verbindet.

7. Verfahren zur Herstellung eines Differenzdrucksensors (1) nach Anspruch 6, wobei der Differenzdrucksensor (1) einen Sensorelementträger (15) beinhaltet, der eine Hülle (16), die von der Leiterplatte (3) getragen wird, eine obere Öffnung (17) und eine untere Öffnung (18), die von dem drucksensitiven Element (2) verschlossen wird, umfasst, wobei die untere Öffnung (18) durch ein Rohr (19) verlängert wird, das in die Öffnung (4) der Leiterplatte (3) eingeführt ist, **dadurch gekennzeichnet, dass** das Verfahren vor dem Schritt des Einspritzens eines Harzes in den Hohlraum (7) des Schutzgehäuses (6) Folgendes beinhaltet:
- einen Schritt des Verschließens des Schutzgehäuses (6) durch einen Deckel (21), der einen Kanal (22) umfasst, der ein erstes Ende (23) in Fluidkommunikation mit dem ersten Druckeingang (8) des Schutzgehäuses (6) und ein zweites Ende (24) beinhaltet, wobei das zweite Ende (24) in das Rohr (19) des Sensorelementträgers (15) eingesteckt ist, um so den ersten Druckweg (12a) zu bilden.

8. Verfahren zur Herstellung eines Differenzdrucksensors (1) nach Anspruch 7, **dadurch gekennzeichnet, dass** während des Schritts des Einspritzens des Harzes der Hohlraum (7) des Schutzgehäuses (6) bis in die Nähe des ersten Endes (23) des Kanals (22), ohne dieses zu bedecken, und bis in die Nähe der oberen Öffnung (17) der Hülle (16), ohne diese zu bedecken, mit dem Harz gefüllt wird.

## Claims

1. Differential-pressure sensor (1) for measuring the pressure in an exhaust pipe of a combustion engine, comprising:
- a pressure-sensitive element (2),
- a printed circuit (3) comprising an opening (4) closed by the pressure-sensitive element (2) and electronic components electrically connected to the pressure-sensitive element (2) by means of electrical connections (5),
- a protective housing (6) comprising a cavity (7) in which the printed circuit (3) and the pressure-sensitive element (2) are housed, said protective housing (6) comprising a first pressure inlet (8) and a second pressure inlet (9),
- the printed circuit (3) being an epoxy resin printed circuit,
- the pressure sensor (1) comprising a solid material (10) partially filling the cavity (7) of the protective housing (6) and encapsulating the printed circuit (3) so as to insulate the external surface (11 and 32) thereof from the exhaust gases and so as to form two pressure pathways (12a, 12b) insulated from one another by the solid material (10), these being a first pressure pathway (12a), which connects the first pressure inlet (8) to the lower surface (13) of the pressure-sensitive element (2), and a second pressure pathway (12b), which connects the second pressure inlet (9) to the upper surface (14) of the pressure-sensitive element (2), the solid material (10) being an injected epoxy resin
**characterized in that** it also comprises:
- a sensitive-element support (15) comprising a casing (16) supported by the printed circuit (3) and comprising an upper opening (17) and a lower opening (18) which is closed by the pressure-sensitive element (2), said lower opening (18) being extended by a tube (19) inserted into the opening (4) of the printed circuit (3).

2. Differential-pressure sensor (1) according to Claim 1, **characterized in that** the tube (19) extends partially through the solid material (10).

3. Differential-pressure sensor (1) according to either one of Claims 1 and 2, **characterized in that** the casing (16) of the sensitive-element support (15) contains a gel (20) to protect the upper surface (14) of the pressure-sensitive element (2).

4. Differential-pressure sensor (1) according to any one of Claims 1 to 3, **characterized in that** the protective housing (6) comprises a cover (21) comprising a passage (22) comprising a first end (23) in fluidic communication with the first pressure inlet (8) of the protective housing (6) and a second end (24) connected to the tube (19) of the sensitive-element support (15) so as to form the first pressure pathway (12a).

5. Differential-pressure sensor (1) according to any one of Claims 1 to 4, **characterized in that** the second pressure inlet (9) of the protective housing (6) is in fluidic communication with the upper opening (17) of the casing (16) of the sensitive-element support (15) so as to form the second pressure pathway (12b).

6. Method for manufacturing a differential-pressure sensor (1) according to any one of Claims 1 to 5, **characterized in that** it comprises the following steps:
- providing a protective housing (6) comprising a cavity (7), a first pressure inlet (8) and a second pressure inlet (9),
- placing an epoxy resin printed circuit (3) in the cavity (7) of the protective housing (6), said printed circuit (3) comprising an opening (4) closed by the pressure-sensitive element (2),
- injecting a resin into the cavity (7) of the protective housing (6) in order to form a solid material (10) partially filling the cavity (7) of the protective housing (6) and encapsulating the printed circuit (3) so as to insulate the external surface (11 and 32) thereof from the exhaust gases and so as to form two pressure pathways (12a, 12b) insulated from one another by the solid material (10), these being a first pressure pathway (12a), which connects the first pressure inlet (8) to the lower surface (13) of the pressure-sensitive element (2), and a second pressure pathway (12b), which connects the second pressure inlet (9) to the upper surface (14) of the pressure-sensitive element (2).

7. Method for manufacturing a differential-pressure sensor (1) according to Claim 6, the differential-pressure sensor (1) comprising a sensitive-element support (15) comprising a casing (16) supported by the printed circuit (3) and comprising an upper opening (17) and a lower opening (18) which is closed by the pressure-sensitive element (2), said lower opening (18) being extended by a tube (19) inserted into the opening (4) of the printed circuit (3), **characterized in that** the method comprises, before the step of injecting a resin into the cavity (7) of the protective housing (6),
- a step of closing the protective housing (6) with a cover (21) comprising a passage (22) comprising a first end (23) in fluidic communication with the first pressure inlet (8) of the protective housing (6) and a second end (24), said second end (24) being fitted into the tube (19) of the sensitive-element support (15) so as to form the first pressure pathway (12a).

8. Method for manufacturing a differential-pressure sensor (1) according to Claim 7, **characterized in that**, during the step of injecting the resin, the cavity (7) of the protective housing (6) is filled with the resin as far as the vicinity of the first end (23) of the passage (22) without covering said end and as far as the vicinity of the upper opening (17) of the casing (16) without covering said opening.
